# EUROPEAN PATENT APPLICATION

(11) **EP 4 273 503 A1**
(43) Date of publication of application: **08.11.2023**
(21) Application number: 23171703.4
(22) Date of filing: 04.05.2023
(51) Int. Cl.: G01C 21/20, G01C 21/34, G01C 21/36

(54) **FISHING NAVIGATION METHOD AND APPARATUS, DEVICE, AND STORAGE MEDIUM**

(30) Priority: 07.05.2022 CN 202210491884
(71) Applicant: Guangdong Coros Sports Technology Joint Stock Company, Dongguan, Guangdong 523808 (CN)
(72) Inventor: NIU, Haotian, DONGGUAN GUANGDONG, 523808 (CN); TANG, Yu, DONGGUAN GUANGDONG, 523808 (CN); XU, Hongbo, DONGGUAN GUANGDONG, 523808 (CN)
(74) Representative: Weber, Jean-François

(57) **Abstract**

Provided are a fishing navigation method and apparatus, a device, and a storage medium, applied to a target fishing area. The target fishing area includes at least one fishing spot. The method includes: acquiring at least one fishing plan corresponding to the target fishing area, where each of the at least one fishing plan includes a location and a fishing time period corresponding to each of the at least one target fishing spot; acquiring a fishing plan selection operation of the user; determining a target fishing plan from the at least one fishing plan according to the fishing plan selection operation; and generating navigation information according to the location of each of the at least one target fishing spot and the fishing time period corresponding to each of the at least one target fishing spot to guide the user to perform the target fishing plan.

## Description

### TECHNICAL FIELD

The present disclosure relates to the field of electronic maps and, in particular, to a fishing navigation method and apparatus, a device, and a storage medium.

### BACKGROUND

In fishing activities, especially in lure fishing, many fishing-related devices and methods are able to track fishing activities of anglers through recording, and information about the fishing activities can be shared with others. Sharing the fishing activities can help the anglers review their own detailed fishing strategies, and beginners can quickly improve their fishing abilities by learning and imitating shared fishing activities of others. However, the information about the fishing activities is largely limited to the level of sharing and viewing and has not been effectively converted into methods or fishing strategies that can guide anglers in real time during real fishing activities according to the preceding shared information. This, to some extent, hinders the improvement of fishing abilities of the anglers, especially the beginners.

In the related art, there are technical solutions for analyzing and providing a target fishing area and a target fishing spot of an angler according to fishing big data, but the technical solutions only recommend positioning information of the target fishing spot and neither provide a suitable fishing time period for the target fishing spot nor output fishing navigation information in real-time fishing.

### SUMMARY

The present disclosure provides a fishing navigation method and apparatus, a device, and a storage medium, so as to provide assistance and guidance to users in their fishing activities.

According to one aspect of the present disclosure, a fishing navigation method is provided, which is applied to a target fishing area, where the target fishing area includes at least one fishing spot and is obtained based on a selection of a user. The method includes the steps below.

At least one fishing plan corresponding to the target fishing area is acquired, where each of the at least one fishing plan includes a location of each of at least one target fishing spot and a fishing time period corresponding to each of the at least one target fishing spot, where the at least one target fishing spot is selected from the at least one fishing spot of the target fishing area.

A fishing plan selection operation of the user is acquired.

A target fishing plan is determined from the at least one fishing plan according to the fishing plan selection operation.

Navigation information is generated according to the location of each of the at least one target fishing spot and the fishing time period corresponding to each of the at least one target fishing spot to guide the user to perform the target fishing plan.

According to another aspect of the present disclosure, a fishing navigation apparatus is provided, which is applied to a target fishing area, where the target fishing area includes at least one fishing spot and is obtained based on a selection of a user. The fishing navigation apparatus includes at least one processor, where the at least one processor is configured to execute the operations below.

At least one fishing plan corresponding to the target fishing area is acquired, where each of the at least one fishing plan includes a location of each of at least one target fishing spot and a fishing time period corresponding to each of the at least one target fishing spot, where the at least one target fishing spot is selected from the at least one fishing spot of the target fishing area.

A fishing plan selection operation of the user is acquired.

A target fishing plan is determined from the at least one fishing plan according to the fishing plan selection operation.

Navigation information is generated according to the location of each of the at least one target fishing spot and the fishing time period corresponding to each of the at least one target fishing spot to guide the user to perform the target fishing plan.

According to another aspect of the present disclosure, an electronic device is provided. The electronic device includes at least one processor and a memory.

The memory is communicatively connected to the at least one processor.

The memory stores a computer program executable by the at least one processor, and the computer program, when executed by the at least one processor, causes the at least one processor to perform the fishing navigation method according to any one of embodiments of the present disclosure.

According to another aspect of the present disclosure, a computer-readable storage medium is provided. The computer-readable storage medium stores a computer instruction, where the computer instruction, when executed by a processor, causes the processor to perform the fishing navigation method according to any one of embodiments of the present disclosure.

In the embodiments of the present disclosure, the target fishing plan is determined based on the selection of the user and then the navigation information is generated according to the location of each of the at least one target fishing spot and the fishing time period corresponding to each of the at least one target fishing spot in the target fishing plan to guide the user to perform the target fishing plan. In this manner, the time for the user to investigate and find fish on site is saved, and the user can improve the fishing level of the user by learning from fishing experience of others.

It is to be understood that the content described in this part is neither intended to identify key or important features of the embodiments of the present disclosure nor intended to limit the scope of the present disclosure. Other features of the present disclosure are apparent from the description provided hereinafter.

### BRIEF DESCRIPTION OF DRAWINGS

To illustrate solutions in embodiments of the present disclosure more clearly, the accompanying drawings used in the description of the embodiments are described briefly below. Apparently, the accompanying drawings described below illustrate part of embodiments of the present disclosure, and those skilled in the art may obtain other accompanying drawings according to the accompanying drawings described below on the premise that no creative work is done.
FIG. 1 is a flowchart of a fishing navigation method according to an embodiment of the present disclosure.
FIG. 2 is a flowchart of a method for determining a target fishing area according to an embodiment of the present disclosure.
FIG. 3 is a flowchart of a method for determining a target fishing area according to an embodiment of the present disclosure.
FIG. 4 is a flowchart of a method for determining a target fishing area according to an embodiment of the present disclosure.
FIG. 5 is a flowchart of a method for determining at least one fishing plan according to an embodiment of the present disclosure.
FIGS. 6A to 6C are flowcharts of a method for generating navigation information in three different cases according to an embodiment of the present disclosure.
FIG. 7 is a structure diagram of an electronic device for implementing a fishing navigation method according to an embodiment of the present disclosure.

### DETAILED DESCRIPTION

For a better understanding of the technical solutions by those skilled in the art, the solutions in embodiments of the present disclosure will be described clearly and completely in conjunction with the drawings in embodiments of the present disclosure. Apparently, the embodiments described below are part, not all, of the embodiments of the present disclosure. According to the embodiments described herein, all other embodiments obtained by those skilled in the art on the premise that no creative work is done are within the scope of the present disclosure.

It is to be noted that the terms "first", "second", and the like in the description, claims, and drawings of the present disclosure are used for distinguishing between similar objects and are not necessarily used for describing a particular order or sequence. It is to be understood that the data used in this way are interchangeable where appropriate so that the embodiments of the present disclosure described herein may also be implemented in a sequence not illustrated or described herein. In addition, the terms "include", "have", or any other variations thereof are intended to encompass a non-exclusive inclusion. For example, a process, method, system, product, or equipment that includes a series of steps or units not only includes the expressly listed steps or units but may also include other steps or units that are not expressly listed or are inherent to such process, method, product, or equipment.

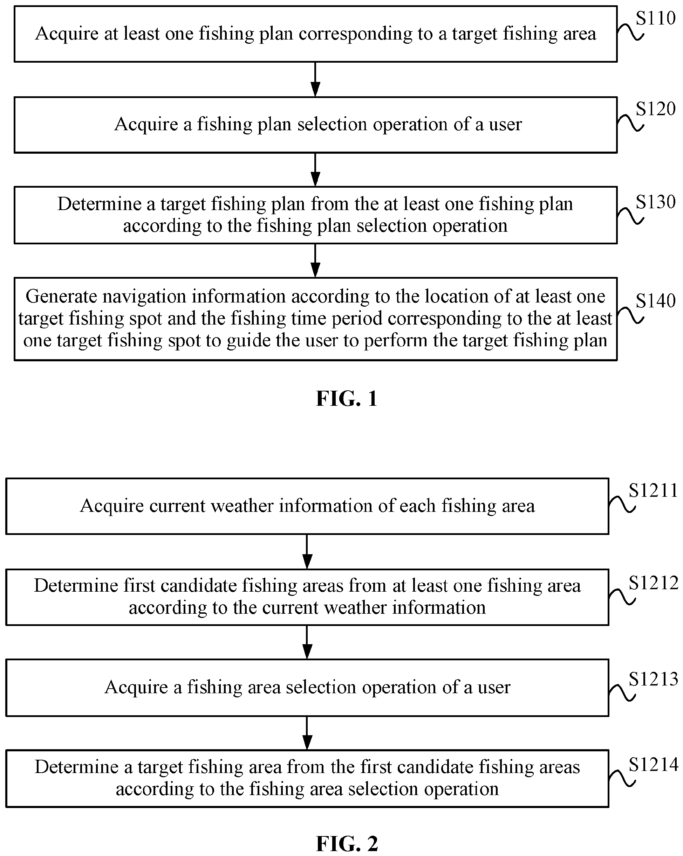

FIG. 1 is a flowchart of a fishing navigation method according to an embodiment of the present disclosure. This embodiment is applicable to the case where a user is assisted in a fishing activity. The method may be performed by a fishing navigation apparatus. The fishing navigation apparatus may be implemented by hardware and/or software and configured in an electronic device. This method is applied to a target fishing area, where the target fishing area includes at least one fishing spot and is obtained based on a selection of the user. As shown in FIG. 1, the method includes the steps below.

In S 110, at least one fishing plan corresponding to the target fishing area is acquired.

A fishing plan includes a location of each of at least one target fishing spot and a fishing time period corresponding to each of the at least one target fishing spot, where the at least one target fishing spot is selected from the at least one fishing spot of the target fishing area. Further, the user is a user who uses the fishing navigation method, a fishing area is waters where the fishing activity can be carried out, such as an ocean, a lake, a stream, and a river, and the target fishing area is a fishing area selected by the user and where the user is predicted to go for fishing.

In some embodiments, the fishing spot refers to a specific location near the fishing area and where the fishing activity can be carried out. For example, if the fishing area is a river, the corresponding fishing spot may be a spit of the river, or if the fishing area is a fishing pond, the corresponding fishing spot may be the vicinity of a fish gathering point of the fishing pond. The fishing time period refers to a time period suitable for the fishing activity at each fishing spot. Different fishing spots may correspond to different fishing time periods. For example, fishing spot A is most suitable for fishing from 9 a.m. to 11 a.m., and fishing spot B is most suitable for fishing from 4 p.m. to 6 p.m. Thus, a fishing time period corresponding to fishing spot A is 9 a.m. to 11 a.m., and a fishing time period corresponding to fishing spot B is 4 p.m. to 6 p.m.

Further, the target fishing area includes the at least one fishing spot, and the at least one target fishing spot refers to one or more of the at least one fishing spot. The fishing plan may refer to relevant information of the target fishing spot, including, but not limited to, the location of the target fishing spot and the fishing time period corresponding to the target fishing spot. For example, the fishing plan may be fishing at fishing spot A from 9 a.m. to 11 a.m., fishing at fishing spot B from 4 p.m. to 6 p.m., and fishing at fishing spot C from 7 p.m. to 9 p.m.

Optionally, one or more fishing plans may be designed in advance according to the situation of each fishing spot. After the user determines the target fishing area, the one or more fishing plans may be displayed for the user to select from. Alternatively, historical data of users may be collected. According to methods such as big data analysis and machine learning, fishing spots where fish are most likely to be caught and corresponding fishing time periods are recommended for the target fishing area and used as fishing plans, and fishing plans are classified according to fishing areas and stored in the fishing navigation apparatus. Each fishing area corresponds to at least one fishing plan. After the target fishing area is determined, the corresponding fishing plan may be extracted.

In S 120, a fishing plan selection operation of the user is acquired.

In some embodiments, the at least one fishing plan of the target fishing area may be displayed through a list or an image with a text or in other manners for the user to select from.

Optionally, the user may select the fishing plan by performing an operation on a user interface in a manner such as manual input or a voice instruction through a knob or a screen of a smart terminal such as a smartphone or a smartwatch. Preferably, each fishing plan may correspondingly display a percentage of selections of users. For example, 90% of the users select fishing plan one, and 70% of the users select fishing plan two. In this manner, reference can be provided for the user to select the fishing plan. Further, the fishing plan selection operation of the user may be acquired according to the operation of the user.

In S 130, a target fishing plan is determined from the at least one fishing plan according to the fishing plan selection operation of the user.

The target fishing plan refers to a fishing plan that the user selects and expects to perform.

In some embodiments, in response to the fishing plan selection operation of the user, information about the target fishing plan may be extracted from the operation, and the target fishing plan may be determined from pre-stored fishing plans.

In S 140, navigation information is generated according to the location of the at least one target fishing spot and the fishing time period corresponding to the at least one target fishing spot to guide the user to perform the target fishing plan.

The navigation information refers to information for guiding the user to perform the target fishing plan.

In this embodiment, the navigation information may include a current location of the user and the location of each target fishing spot, and a route between the current location of the user and the location of each target fishing spot is displayed by a line. The navigation information may further include a relative position relationship between the at least one target fishing spot, and the fishing time period corresponding to each target fishing spot is marked.

Optionally, the target fishing spot in the target fishing plan may be determined according to the target fishing plan selected by the user, the location of each target fishing spot and the fishing time period corresponding to each target fishing spot may be determined, and the navigation information may be generated to guide the user to perform the target fishing plan. For example, the target fishing plan includes fishing at fishing spot A from 9 a.m. to 11 a.m., fishing at fishing spot B from 4 p.m. to 6 p.m., and fishing at fishing spot C from 7 p.m. to 9 p.m., and the current time is 8 a.m. The navigation information may guide the user to fishing spot A first, then guide the user to fishing spot B when the fishing time period of fishing spot A ends, and guide the user to fishing spot C when the fishing time period of fishing spot Bends.

Further, a method for determining the target fishing area may include that: a fishing area selection operation of the user is acquired, and the target fishing area is determined from at least one fishing area according to the fishing area selection operation.

In the fishing activity, especially in lure fishing, the user usually records a fishing process and results and shares them with other users. Sharing between users can help the users to learn and improve fishing skills, and some users may deliberately imitate a fishing strategy of a sharer according to shared information. Generally, before setting out to perform the fishing activity, the user often plans the fishing activity and decides a fishing area where fishing is to be performed in advance. The user may select the fishing area by performing an operation, through manual input or a voice instruction, on the user interface of the fishing navigation apparatus for performing the fishing navigation method. For example, the user may perform the operation through the knob or the screen of the smart terminal such as the smartphone or the smartwatch. In response to an instruction from the user, the fishing area selection operation of the user may be acquired.

In some embodiments, the at least one fishing area may be pre-stored in the fishing navigation apparatus and displayed for the user to select from. Preferably, fishing areas may be displayed in the form of a list on the user interface. Further, the fishing areas may be classified according to regions so that the user can select a region where the user desires to go and then perform the fishing area selection operation on fishing areas corresponding to the region. In response to the fishing area selection operation of the user, information about the target fishing area may be extracted from the operation, and the target fishing area may be determined from the at least one fishing area pre-stored in the fishing navigation apparatus.

The fishing navigation method according to the embodiment of the present disclosure is applied to the target fishing area, where the target fishing area includes the at least one fishing spot and is obtained based on the selection of the user. The method includes the steps below. The at least one fishing plan corresponding to the target fishing area is acquired, where the fishing plan includes the location of each of the at least one target fishing spot and the fishing time period corresponding to each of the at least one target fishing spot, where the target fishing spot is selected from the at least one fishing spot of the target fishing area. The fishing plan selection operation of the user is acquired. The target fishing plan is determined from the at least one fishing plan according to the fishing plan selection operation. Finally, the navigation information is generated according to the location of each of the at least one target fishing spot and the fishing time period corresponding to each of the at least one target fishing spot to guide the user to perform the target fishing plan. According to the fishing navigation method in the embodiment of the present disclosure, the user is provided with selections of a fishing spot and a fishing plan, and the navigation information is generated so that the time for the user to investigate and find fish on site is saved, and the user can improve the fishing level of the user by learning from fishing experience of others.

FIG. 2 is a flowchart of a method for determining a target fishing area according to an embodiment of the present disclosure. This embodiment is another possible implementation of the preceding embodiment. As shown in FIG. 2, the method includes the steps below.

In S1211, current weather information of each fishing area is acquired.

Generally, a fishing activity is easily affected by weather. For example, wind and rain both affect the oxygen content of a body of water and thus affect a fish gathering position. Therefore, the target fishing area can be determined according to weather information.

In some embodiments, the fishing navigation apparatus that performs the fishing navigation method may have clock, positioning, and networking functions and may acquire the current weather information through a network according to a current location and time.

Optionally, the fishing navigation apparatus that performs the fishing navigation method may include a clock module configured to acquire, in real time, current time information such as accurate year, month, and day. The clock module may be a clock generation module separately disposed in the apparatus or integrated with a location acquisition module, for example, a Global Positioning System (GPS) synchronized clock. The current weather information may be acquired through the preceding module.

In S1212, first candidate fishing areas are determined from at least one fishing area according to the current weather information.

The first candidate fishing areas are fishing areas recommended to a user according to the current weather information. The user may select the target fishing area from the first candidate fishing areas.

In some embodiments, the first candidate fishing areas may be determined from the at least one fishing area according to the current weather information in the following manner: weather information corresponding to each fishing area is determined, and fishing areas corresponding to weather information that matches the current weather information are determined to be the first candidate fishing areas.

Specifically, a weather condition that matches each fishing area may be determined in advance. For example, the historical data of the users are analyzed by the methods such as big data analysis and machine learning so that data on the weather condition that matches each fishing area are extracted and stored in correspondence with the fishing area in the apparatus. After the current weather information is obtained, the current weather information may be matched with pre-stored data. If matching data exist, the corresponding fishing areas are determined to be the first candidate fishing areas.

Optionally, the first candidate fishing areas may be sorted according to the priorities of the weather and displayed on a display device of a fishing system. Optionally, the priorities corresponding to the weather (from high to low) may be: sunny, cloudy, windy, rainy, frost, snow, and hail. For example, if the current weather information acquired is sunny, and weather conditions corresponding to five fishing areas A, B, C, D, and E are rainy, cloudy, windy, sunny, and rainy in the pre-stored data, fishing areas D, B, and C are determined to be the first candidate fishing areas and displayed in this order: first candidate fishing area D, first candidate fishing area B, and first candidate fishing area C.

Optionally, when candidate areas correspond to the same weather, the priorities of the first candidate fishing areas may be determined according to other parameters of the first candidate fishing areas, such as the distance between the first candidate fishing area and the user, and a first candidate fishing area with a smaller distance may be displayed preferentially on a graphical user interface (GUI). For example, if the weather corresponding to each of first candidate fishing areas A, B, and C is sunny, and the distances between the user and first candidate fishing areas A, B, and C are 3 km, 1 km, and 7 km, respectively, the order of display may be first candidate fishing area B, first candidate fishing area A, and first candidate fishing area C.

In S1213, a fishing area selection operation of the user is acquired.

In some embodiments, after the first candidate fishing areas are determined, the first candidate fishing areas may be displayed for the user to select from in the form of a list or cards. The user may perform a selection operation on the first candidate fishing areas.

In S1214, the target fishing area is determined from the first candidate fishing areas according to the fishing area selection operation.

In some embodiments, in response to the fishing area selection operation of the user, information about the target fishing area may be extracted from the operation, and the target fishing area may be determined from the first candidate fishing areas determined in the preceding step.

Specifically, the current weather information may be acquired, the first candidate fishing areas are determined from the at least one fishing area according to the current weather information, the fishing area selection operation of the user is acquired, and the target fishing area is determined from the first candidate fishing areas according to the fishing area selection operation. The method for determining the target fishing area according to the embodiment of the present disclosure provides the user with a manner for determining the target fishing area according to the weather information so that the user can acquire recommendations for fishing areas suitable for the weather information and does not need to perform determination according to experience of the user.

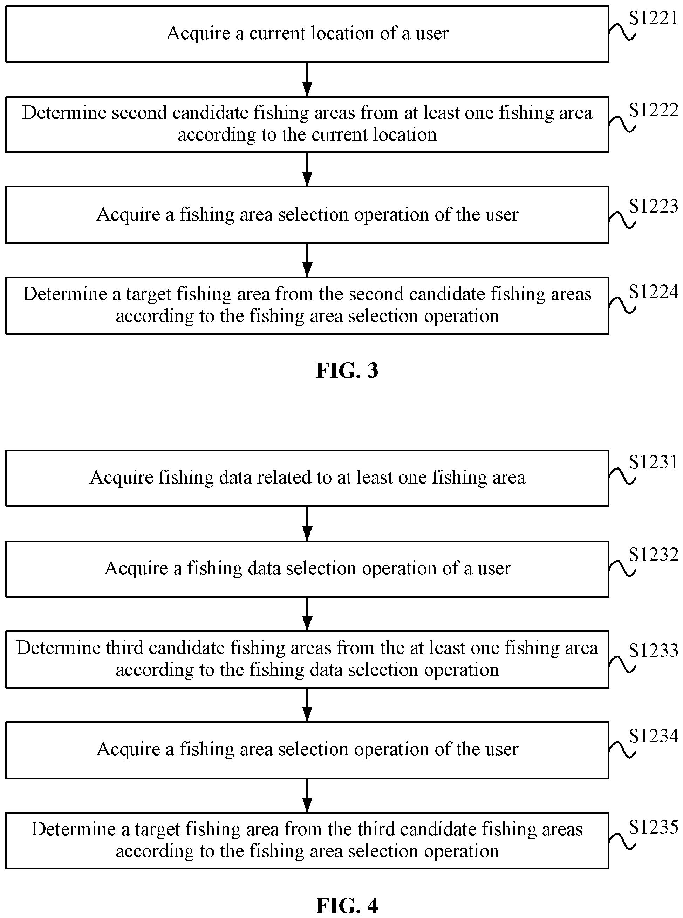

FIG. 3 is a flowchart of a method for determining a target fishing area according to an embodiment of the present disclosure. This embodiment is another possible implementation of the preceding embodiment. As shown in FIG. 3, the method includes the steps below.

In S 1221, a current location of a user is acquired.

In some embodiments, the fishing navigation apparatus performing the fishing navigation method may include a location acquisition module such as any one of the Global Positioning System (GPS), the BeiDou Navigation Satellite System, the Galileo satellite navigation system, the Global Navigation Satellite System or a combination of two or more thereof.

Optionally, a real-time location of the user may be acquired through the location acquisition module, where the real-time location may include latitude and longitude information and altitude information of the current location, and the real-time location of the user may be used as the current location. Alternatively, location information input by the user may be received and used as the current location.

It is to be understood that before the use of the technical solutions disclosed in the embodiments of the present disclosure, the user should be informed of and authorize the use of the type, scope of use, scene of use, etc. of personal information involved in the present disclosure in an appropriate manner in accordance with the relevant laws and regulations. The acquisition, storage, use, processing, etc. of data in the technical solutions of the present application comply with the relevant provisions of the national laws and regulations.

In S 1222, second candidate fishing areas are determined from at least one fishing area according to the current location.

The second candidate fishing areas are fishing areas recommended to the user according to the current location. The user may select the target fishing area from the second candidate fishing areas.

In some embodiments, the second candidate fishing areas may be determined from the at least one fishing area according to the current location in the following manner: a location of each fishing area is acquired, the distance between the current location and each fishing area is determined according to the current location and the location of each fishing area, and one of the at least one fishing area having a distance smaller than a set distance threshold is determined to be a second candidate fishing area.

Specifically, the distance may be a linear distance between the user and the fishing area. According to the current location of the user, nearby fishing areas may be recommended to the user. With the current location as the center of a circle and the set distance threshold as the radius of the circle, areas within the circle may be used as a nearby area of the current location. The distance between the current location and each fishing area is determined so that fishing areas located in the nearby area can be found and determined to be the second candidate fishing areas to be recommended to the user.

Optionally, the distance may be the length of a route between the user and the fishing area. According to the current location of the user and the location of the fishing area, the length of the route between the user and each fishing area may be determined. A route length threshold is set, and a fishing area with a distance smaller than the set route length threshold is determined to be the second candidate fishing area.

In 1223, a fishing area selection operation of the user is acquired.

In some embodiments, after the second candidate fishing areas are determined, the second candidate fishing areas may be displayed for the user to select from in the form of a list or cards. The user may perform a selection operation on the second candidate fishing areas.

In S 1224, the target fishing area is determined from the second candidate fishing areas according to the fishing area selection operation.

In some embodiments, in response to the fishing area selection operation of the user, information about the target fishing area may be extracted from the operation, and the target fishing area may be determined from the second candidate fishing areas determined in the preceding step.

Specifically, the current location of the user may be acquired, the second candidate fishing areas are determined from the at least one fishing area according to the current location, the fishing area selection operation of the user is acquired, and the target fishing area is determined from the second candidate fishing areas according to the fishing area selection operation. The method for determining the target fishing area according to the embodiment of the present disclosure provides the user with a manner for determining the target fishing area according to the current location so that the user can acquire recommendations for fishing areas near the current location and does not need to search for the distance between each fishing area and the current location.

FIG. 4 is a flowchart of a method for determining a target fishing area according to an embodiment of the present disclosure. This embodiment is another possible implementation of the preceding embodiment. As shown in FIG. 4, the method includes the steps below.

In S 1231, fishing data related to at least one fishing area are acquired.

The fishing data include one or more of the species, size, sex, and color of a fish included in a fishing area related to the fishing data.

Before a user carries out a fishing activity, expected fishing data may exist, that is, the user may expect to obtain fish of a specific species, size, sex, and color through the fishing activity. For example, the user may expect to catch a 40 cm-long bass. In this case, "40 cm, bass" are the expected fishing data of the user in this fishing activity.

Specifically, for each fishing area, fishing data corresponding to the each fishing area, that is, data on the species, size, sex, and color of fish included in the each fishing area, may be pre-stored, or the fishing data may be referenced from a server through a network.

In 1232, a fishing data selection operation of the user is acquired.

In some embodiments, information input by the user may be received, the fishing data selection operation may be acquired from the information input by the user, and fishing data are extracted.

Optionally, the fishing data selection operation of the user may be acquired from the information input by the user. The user may input the fishing data through word input or voice input. According to a user interface of the apparatus performing the fishing navigation method, the user may input the information through a user input terminal of the user interface. The user input terminal may include a key, a knob, or a touch screen of a terminal device such as a smartwatch, a smart band, or a smartphone. Alternatively, fishing data may be displayed for the user to select from in the form of a list or options so that the fishing data selection operation of the user is acquired.

In S1233, third candidate fishing areas are determined from the at least one fishing area according to the fishing data selection operation.

The third candidate fishing areas are fishing areas recommended to the user according to the fishing data selection operation of the user.

In some embodiments, the third candidate fishing areas may be determined from the at least one fishing area according to the fishing data selection operation in the following manner: the fishing data corresponding to each fishing area are determined, and fishing areas corresponding to fishing data that match the fishing data selection operation are determined to be the third candidate fishing areas.

Specifically, the fishing data corresponding to each fishing area are determined, and the fishing data selected by the user are matched with the fishing data corresponding to each fishing area so that the third candidate fishing areas can be determined. For example, the fishing data selected by the user are "40 cm, bass". After data matching, fishing areas corresponding to fishing data "30 to 40 cm, bass" and "80 to 90 cm, grass carp" exist, and then the fishing areas are determined to be the third candidate fishing areas.

In S1234, a fishing area selection operation of the user is acquired.

In some embodiments, after the third candidate fishing areas are determined, the third candidate fishing areas may be displayed for the user to select from in the form of a list or cards. The user may perform a selection operation on the third candidate fishing areas.

In S1235, the target fishing area is determined from the third candidate fishing areas according to the fishing area selection operation.

In some embodiments, in response to the fishing area selection operation of the user, information about the target fishing area may be extracted from the operation, and the target fishing area may be determined from the third candidate fishing areas determined in the preceding step.

Specifically, the fishing data related to the at least one fishing area may be acquired, the fishing data selection operation of the user is acquired, the third candidate fishing areas are determined from the at least one fishing area according to the fishing area selection operation, the fishing area selection operation of the user is acquired, and the target fishing area is determined from the third candidate fishing areas according to the fishing area selection operation. The method for determining the target fishing area according to the embodiment of the present disclosure provides the user with a manner for determining the target fishing area according to the related fishing data so that fishing areas can be recommended to the user according to the expected fishing data of the user and the user can have a greater possibility of achieving expectations of the user.

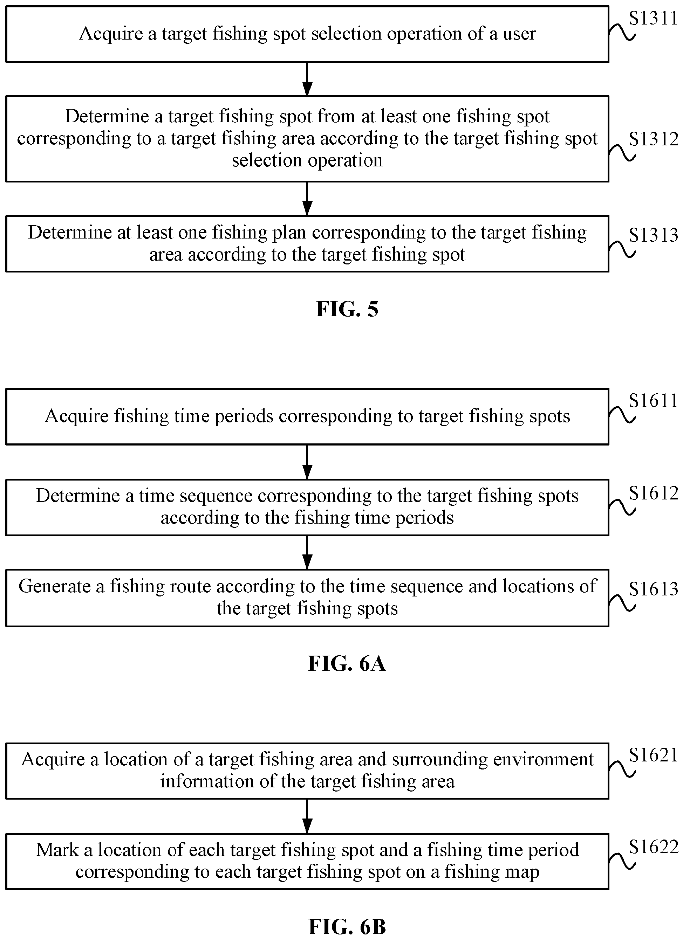

FIG. 5 is a flowchart of a method for determining at least one fishing plan according to embodiment five of the present disclosure. This embodiment is a possible implementation of S110. As shown in FIG. 5, the method includes the steps below.

In S1311, a target fishing spot selection operation of a user is acquired.

The user may mark a fishing spot where fish are most likely to be caught by investigating a fishing area in advance before carrying out a fishing activity. In this case, the user may select a target fishing spot according to needs.

In some embodiments, the user may select the target fishing spot through manual input on a user interface or select the target fishing spot through voice recognition. According to an instruction from the user, the target fishing spot selection operation of the user may be acquired.

In S1312, the target fishing spot is determined from at least one fishing spot corresponding to a target fishing area according to the target fishing spot selection operation.

In the preceding description, multiple manners for determining the target fishing area have been provided, and details are not repeated here. In this embodiment, the target fishing area may be determined in any of the preceding manners. After the target fishing area is determined, the target fishing spot may be determined from the at least one fishing spot corresponding to the target fishing area according to the target fishing spot selection operation.

Optionally, the target fishing area includes the at least one fishing spot. According to the operation of the user, information about the target fishing spot may be extracted, and the target fishing spot selected by the user may be determined from the at least one fishing spot.

In S1313, at least one fishing plan corresponding to the target fishing area is determined according to the target fishing spot.

In some embodiments, after the target fishing spot is determined, at least one fishing plan related to the target fishing spot may be determined to be the fishing plan for the target fishing area, and the fishing plan related to the target fishing spot may be a fishing plan including at least one fishing spot of the target fishing spot.

Optionally, the at least one fishing plan corresponding to the target fishing area may be determined according to the target fishing spot in the following manner: a location of the target fishing spot and a fishing time period corresponding to the target fishing spot are acquired, and the at least one fishing plan is determined according to the location of the target fishing spot and the fishing time period corresponding to the target fishing spot.

Specifically, according to the target fishing spot selected by the user, a location and a fishing time period of each target fishing spot may be determined. For example, if target fishing spots selected by the user are fishing spots A, B, and C, and the corresponding fishing time periods are 8 a.m. to 10 a.m., 3 p.m. to 5 p.m., and 3 p.m. to 5 p.m. respectively, the determined fishing plan may be fishing at fishing spot A from 8 a.m. to 10 a.m. and fishing at fishing spot B from 3 p.m. to 5 p.m. or may be fishing at fishing spot A from 8 a.m. to 10 a.m. and fishing at fishing spot C from 3 p.m. to 5 p.m.

Specifically, the target fishing spot selection operation of the user may be acquired, the target fishing spot is determined from the at least one fishing spot corresponding to the target fishing area according to the target fishing spot selection operation, and the at least one fishing plan corresponding to the target fishing area is determined according to the target fishing spot. The embodiment of the present disclosure provides a method for determining the fishing plan according to the target fishing spot selected by the user so that the user can be recommended with a fishing plan according to the fishing spot where the user expects to go, thereby making the method more user-friendly.

In some embodiments, in S 140, navigation information may be generated according to a location of at least one target fishing spot and a fishing time period corresponding to the at least one target fishing spot to guide the user to perform a target fishing plan, where the navigation information may include, but is not limited to, a fishing route, a fishing map, and a guidance route and an estimated arrival time. Further, the navigation information may be a combination of two or more of the preceding forms. FIGS. 6A to 6C are flowcharts of a method for generating navigation information in three different cases according to an embodiment of the present disclosure.

When the navigation information is a fishing route, as shown in FIG. 6A, the method includes the steps below.

In S1611, fishing time periods corresponding to target fishing spots are acquired.

In some embodiments, the target fishing spots may correspond to different fishing time periods. The fishing time periods are sorted so that a time sequence is obtained, for example, 8 a.m. to 10 a.m., 3 p.m. to 5 p.m., and 6 p.m. to 8 p.m.

In S1612, a time sequence corresponding to the target fishing spots is determined according to the fishing time periods.

In some embodiments, after the fishing time periods corresponding to the target fishing spots are acquired, the fishing time periods may be sorted in chronological order. For example, if the target fishing spots are fishing spots A, B, and C, and the fishing time periods corresponding to fishing spots A, B, and C are 8 a.m. to 10 a.m., 3 p.m. to 5 p.m., and 6 p.m. to 8 p.m. respectively, the three fishing spots are sorted in chronological order as follows: fishing spot A, fishing spot B, and fishing spot C.

In S1613, the fishing route is generated according to the time sequence and locations of the target fishing spots.

In some embodiments, after the time sequence of the fishing time periods of the target fishing spots and the locations of the target fishing spots are obtained, the fishing route may be generated.

Optionally, the locations of the target fishing spots may be marked on a map and connected by a line according to the time sequence, and the line is used as the fishing route.

When the navigation information is a fishing map, as shown in FIG. 6B, the method includes the steps below.

In S1621, a location of a target fishing area and surrounding environment information of the target fishing area are acquired.

The location of the target fishing area may be latitude and longitude, and the surrounding environment information may include surrounding terrain data, landmark buildings, and road traffic information.

In some embodiments, a location of each fishing area and surrounding environment information of each fishing area may be pre-stored in an apparatus or obtained from a server through a network.

In S1622, a location of each target fishing spot and a fishing time period corresponding to each target fishing spot are marked on the fishing map.

The fishing map includes the location of each target fishing spot and the fishing time period corresponding to each target fishing spot.

In some embodiments, the location of the target fishing area corresponding to the target fishing spot and the surrounding environment information of the target fishing area may be represented by a map, and the location of each target fishing spot and the fishing time period corresponding to each target fishing spot are marked in the map. For example, if the target fishing area is a lake, a scaled-down map of the lake and its surrounding environment may be acquired, a position of each target fishing spot relative to the lake may be marked, and the corresponding fishing time period may also be marked.

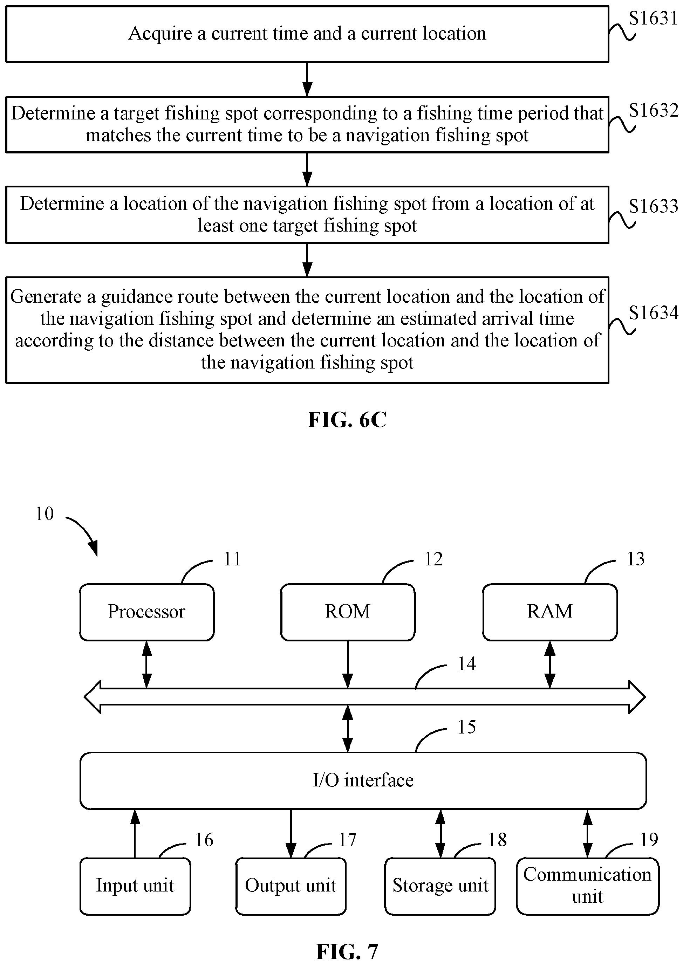

When the navigation information is a guidance route and an estimated arrival time, as shown in FIG. 6C, the method includes the steps below.

In S1631, a current time and a current location are acquired.

The current time and the current location refer to a time when a user uses an apparatus and a location where the user is located.

In some embodiments, after a target fishing plan is determined, to guide the user to perform the target fishing plan, the current time and the current location may be acquired, and the user may be guided to a target fishing spot according to the information.

In S1632, a target fishing spot corresponding to a fishing time period that matches the current time is determined to be a navigation fishing spot.

The navigation fishing spot is one of target fishing spots. The user should go to the navigation fishing spot first at the current time to perform the target fishing plan.

In some embodiments, the fishing time period that matches the current time refers to a fishing time period that is closest to a time later than the current time by a time required for arriving at a fishing spot, where the time later than the current time by the time required for arriving at the fishing spot is within or before the fishing time period. For example, if the current time is 12 a.m., the target fishing spots are fishing spots A, B, and C, the fishing time periods corresponding to fishing spots A, B, and C are 8 a.m. to 10 a.m., 3 p.m. to 5 p.m., and 6 p.m. to 8 p.m. respectively, and it takes one hour for the user to arrive at each of the three fishing spots, the fishing time period that matches the current time is 3 p.m. to 5 p.m. Correspondingly, the navigation fishing spot is fishing spot B.

In S1633, a location of the navigation fishing spot is determined from a location of at least one target fishing spot.

The target fishing plan includes the location of the at least one target fishing spot. In this embodiment, after the navigation fishing spot is determined, retrieval may be performed according to a name and a number of the navigation fishing spot so that the location of the navigation fishing spot is determined from the location of the at least one target fishing spot.

In S1634, the guidance route between the current location and the location of the navigation fishing spot is generated, and the estimated arrival time is determined according to the distance between the current location and the location of the navigation fishing spot.

The guidance route refers to a line of a road between the current location and the location of the navigation fishing spot and is used for guiding the user from the current location to the location of the navigation fishing spot.

In some embodiments, the road between the current location and the location of the navigation fishing spot may be displayed on a map in a specific color or in a highlighted manner. Further, a nearest or most convenient road may be used as the guidance route when more than one road exists between the current location and the location of the navigation fishing spot.

Further, the estimated arrival time may be determined according to the distance between the current location and the location of the navigation fishing spot in the following manner: a motion speed of the user is acquired, and the estimated arrival time is determined according to the motion speed and according to the distance between the current location and the location of the navigation fishing spot.

Specifically, the motion speed of the user may be determined according to a mode of transportation selected by the user. Optionally, the user may select the mode of transportation on a user interface, such as a car, a bicycle, or walking. According to the mode of transportation and a road situation of the guidance route, a speed may be estimated, and the estimated speed is used as the motion speed of the user. Alternatively, after the departure of the user, an average speed of the user may be calculated according to real-time positioning and a timestamp, and the average speed is determined to be the motion speed of the user. Further, the distance between the current location and the location of the navigation fishing spot is determined, and the estimated arrival time may be estimated according to the quotient of distance and the motion speed.

In some embodiments, after the navigation information is generated according to the location of the at least one target fishing spot and the fishing time period corresponding to the at least one target fishing spot, reminder information may be sent to the user based on real-time positioning information.

In some embodiments, the real-time positioning information may be a location where the user is located at the current time. The reminder information may be sent in the following manner: information in the form of a graphic and/or a text is displayed on a terminal screen, or an audio, a video, or a vibration information may be sent.

The reminder information includes, but is not limited to, a route deviation reminder, a remaining time reminder, and a rest reminder. The route deviation reminder is used for reminding the user of a deviation from a navigation route when the current location deviates from the guidance route. The remaining time reminder is used for reminding the user of a remaining fishing time of a fishing spot where the user is located when a remaining time of a fishing time period corresponding to the fishing spot where the user is located is less than a first time threshold. The rest reminder is used for reminding the user to rest when a continuous fishing time of the user is greater than a second time threshold.

Specifically, the real-time positioning information of the user may be acquired by using a positioning module such as the GPS. If the distance between the location of the user and the guidance route exceeds a set distance range, it may be considered that the location of the user deviates from the guidance route. In this case, the route deviation reminder may be sent to the user to remind the user to return to the guidance route. When the user fishes at a fishing spot, whether the current time exceeds a fishing time period of the fishing spot may be determined according to the current time, and the user is reminded in time before the current time exceeds the fishing time period. For example, when the remaining time of the fishing time period of the current fishing spot is less than 15 minutes, the user may be reminded. When the continuous fishing time of the user exceeds a set threshold, the user may be reminded to replenish energy in time or rest.

Further, in addition to the preceding reminders, feedback information may be output when the real-time positioning information is consistent with information about a fishing spot. For example, when the current location of the user is consistent with a location of a target fishing spot, arrival reminder information is sent to remind the user to fish. Further, a casting direction of the user during fishing may be acquired. If the casting direction of the user is inconsistent with an appropriate casting direction of the fishing spot where the user is located, reminder information is output. Further, according to the distance between the current fishing spot and the next fishing spot and the motion speed of the user, an estimated time for arriving at the next fishing spot is calculated, and the user is reminded to change the fishing spot according to the current time, a fishing time period of the next fishing spot, and the time for moving to the next fishing spot. The user is reminded ahead of time, such as 15 or 10 minutes ahead.

Through the preceding methods, the needs of the user can be better met, and the user can be reminded through multiple types of reminder information, improving the fishing efficiency of the user.

An embodiment of the present disclosure further provides a fishing navigation apparatus, which is applied to a target fishing area, where the target fishing area includes at least one fishing spot and is obtained according to a selection of a user. The fishing navigation apparatus includes at least one processor, where the at least one processor is configured to perform the operations below.

At least one fishing plan corresponding to the target fishing area is acquired, where each of the at least one fishing plan includes a location of each of at least one target fishing spot and a fishing time period corresponding to the at least one target fishing spot, where the at least one target fishing spot is selected from the at least one fishing spot of the target fishing area.

A fishing plan selection operation of the user is acquired.

A target fishing plan is determined from the at least one fishing plan according to the fishing plan selection operation.

Navigation information is generated according to the location of each of the at least one target fishing spot and the fishing time period corresponding to each of the at least one target fishing spot to guide the user to perform the target fishing plan.

Optionally, the processor is further configured to acquire a fishing area selection operation of the user and determine the target fishing area from at least one fishing area according to the fishing area selection operation.

Optionally, the processor is further configured to acquire current weather information of each of the at least one fishing area and determine first candidate fishing areas from the at least one fishing area according to the current weather information.

When performing the operation of determining the target fishing area from the at least one fishing area according to the fishing area selection operation, the processor is configured to determine the target fishing area from the first candidate fishing areas according to the fishing area selection operation.

Optionally, the processor is further configured to acquire a current location of the user and determine second candidate fishing areas from the at least one fishing area according to the current location.

When performing the operation of determining the target fishing area from the at least one fishing area according to the fishing area selection operation, the processor is configured to determine the target fishing area from the second candidate fishing areas according to the fishing area selection operation.

Optionally, the processor is further configured to acquire a location of each of the at least one fishing area.

When performing the operation of determining the second candidate fishing areas from the at least one fishing area according to the current location, the processor is configured to determine the distance between the current location and each of the at least one fishing area according to the current location and the location of each of the at least one fishing area and determine one of the at least one fishing area having a distance smaller than a set distance threshold to be a second candidate fishing area of the second candidate fishing areas.

Optionally, the processor is further configured to acquire fishing data related to the at least one fishing area, acquire a fishing data selection operation of the user, and determine third candidate fishing areas from the at least one fishing area according to the fishing data selection operation.

When performing the operation of determining the target fishing area from the at least one fishing area according to the fishing area selection operation, the processor is configured to determine the target fishing area from the third candidate fishing areas according to the fishing area selection operation.

Optionally, the fishing data include one or more of a species, size, sex, and color of a fish included in a fishing area related to the fishing data.

Optionally, the processor is further configured to acquire a target fishing spot selection operation of the user and determine a target fishing spot from the at least one fishing spot corresponding to the target fishing area according to the target fishing spot selection operation.

When performing the operation of acquiring the at least one fishing plan corresponding to the target fishing area, the processor is configured to determine the at least one fishing plan corresponding to the target fishing area according to the target fishing spot.

Optionally, the processor is further configured to acquire a location of the target fishing spot and a fishing time period corresponding to the target fishing spot.

When performing the operation of determining the at least one fishing plan corresponding to the target fishing area according to the target fishing spot, the processor is configured to determine the at least one fishing plan according to the location of the target fishing spot and the fishing time period corresponding to the target fishing spot.

Optionally, the navigation information includes a fishing route. When performing the operation of generating the navigation information according to the location of each of the at least one target fishing spot and the fishing time period corresponding to each of the at least one target fishing spot, the processor is configured to acquire the fishing time period corresponding to each of the at least one target fishing spot, determine a time sequence corresponding to the at least one target fishing spot according to the fishing time period, and generate the fishing route according to the time sequence and the location of each of the at least one target fishing spot.

Optionally, the navigation information includes a fishing map. When performing the operation of generating the navigation information according to the location of each of the at least one target fishing spot and the fishing time period corresponding to each of the at least one target fishing spot, the processor is configured to acquire a location of the target fishing area and surrounding environment information of the target fishing area and mark the location of each of the at least one target fishing spot and the fishing time period corresponding to each of the at least one target fishing spot on the fishing map.

Optionally, the navigation information includes a guidance route and an estimated arrival time. When performing the operation of generating the navigation information according to the location of each of the at least one target fishing spot and the fishing time period corresponding to each of the at least one target fishing spot, the processor is configured to acquire a current time and a current location, determine one of the at least one target fishing spot corresponding to a fishing time period that matches the current time to be a navigation fishing spot, determine a location of the navigation fishing spot from the location of each of the at least one target fishing spot, generate the guidance route between the current location and the location of the navigation fishing spot, and determine the estimated arrival time according to the distance between the current location and the location of the navigation fishing spot.

Optionally, the processor is further configured to acquire a motion speed of the user.

When performing the operation of determining the estimated arrival time according to the distance between the current location and the location of the navigation fishing spot, the processor is configured to determine the estimated arrival time according to the motion speed and according to the distance between the current location and the location of the navigation fishing spot.

Optionally, after performing the step of generating the navigation information according to the location of each of the at least one target fishing spot and the fishing time period corresponding to each of the at least one target fishing spot, the processor is further configured to send reminder information to the user according to real-time positioning information.

Optionally, the reminder information includes at least one of a route deviation reminder, a remaining time reminder, or a rest reminder. The route deviation reminder is used for reminding the user of a deviation from a navigation route when the current location deviates from the guidance route. The remaining time reminder is used for reminding the user of a remaining fishing time of a fishing spot where the user is located when a remaining time of a fishing time period corresponding to the fishing spot where the user is located is less than a first time threshold. The rest reminder is used for reminding the user to rest when a continuous fishing time of the user is greater than a second time threshold.

The fishing navigation apparatus according to the embodiment of the present disclosure may perform the fishing navigation method according to any one of the embodiments of the present disclosure and has functional modules and beneficial effects corresponding to the performed method.

FIG. 7 is a structure diagram of an electronic device 10 that can implement an embodiment of the present disclosure. The electronic device is intended to represent various forms of digital computers, for example, a laptop computer, a desktop computer, a workbench, a personal digital assistant, a server, a blade server, a mainframe computer, or another applicable computer. The electronic device may also represent various forms of mobile apparatuses, for example, a personal digital assistant, a cellphone, a smartphone, a wearable device (such as a helmet, glasses, or a watch), or a similar computing apparatus. Herein the shown components, the connections and relationships between these components, and the functions of these components are illustrative only and are not intended to limit the implementation of the present disclosure as described and/or claimed herein.

As shown in FIG. 7, the electronic device 10 includes at least one processor 11 and a memory communicatively connected to the at least one processor 11, such as a read-only memory (ROM) 12 and a random-access memory (RAM) 13. The memory stores a computer program executable by the at least one processor. A processor 11 may perform various appropriate actions and processing according to a computer program stored in the read-only memory (ROM) 12 or a computer program loaded into the random-access memory (RAM) 13 from a storage unit 18. Various programs and data required for the operation of the electronic device 10 are also stored in the RAM 13. The processors 11, the ROM 12 and the RAM 13 are connected to each other through a bus 14. An input/output (I/O) interface 15 is also connected to the bus 14.

Multiple components in the electronic device 10 are connected to the I/O interface 15. The multiple components include an input unit 16 such as a keyboard or a mouse, an output unit 17 such as various types of displays or speakers, the storage unit 18 such as a magnetic disk or an optical disk, and a communication unit 19 such as a network card, a modem or a wireless communication transceiver. The communication unit 19 allows the electronic device 10 to exchange information/data with other devices over a computer network such as the Internet and/or various telecommunications networks.

The processor 11 may be various general-purpose and/or special-purpose processing components having processing and computing capabilities. Examples of the processor 11 include, but are not limited to, a central processing unit (CPU), a graphics processing unit (GPU), a special-purpose artificial intelligence (AI) computing chip, a processor executing machine learning models and algorithms, a digital signal processor (DSP) and any appropriate processor, controller and microcontroller. The processor 11 performs various methods and processing described above, such as the fishing navigation method.

In some embodiments, the fishing navigation method may be performed as a computer program tangibly contained in a computer-readable medium such as the storage unit 18. In some embodiments, part or all of computer programs may be loaded and/or installed onto the electronic device 10 via the ROM 12 and/or the communication unit 19. When a computer program is loaded into the RAM 13 and executed by the processor 11, one or more steps of the preceding fishing navigation method may be performed. Alternatively, in other embodiments, the processor 11 may be configured, in any other suitable manner (for example, by means of firmware), to perform the fishing navigation method.

Herein various embodiments of the systems and techniques described above may be implemented in digital electronic circuitry, integrated circuitry, field-programmable gate arrays (FPGAs), application-specific integrated circuits (ASICs), application-specific standard products (ASSPs), systems on chips (SoCs), complex programmable logic devices (CPLDs), computer hardware, firmware, software and/or combinations thereof. The various embodiments may include implementations in one or more computer programs. The one or more computer programs are executable and/or interpretable on a programmable system including at least one programmable processor. The programmable processor may be a dedicated or general-purpose programmable processor for receiving data and instructions from a memory system, at least one input device and at least one output device and transmitting the data and instructions to the memory system, the at least one input device and the at least one output device.

The computer programs for performing the method of the present disclosure may be written in any combination of one or more programming languages. The computer programs can be provided for processors of general-purpose computers, special-purpose computers, or other programmable data processing devices, enabling the functions/operations specified in the flowchart and/or block diagram to be implemented when the computer programs are executed by the processor. The computer programs may be executed entirely on a machine or may be executed partly on a machine. As a stand-alone software package, the computer programs may be executed partly on a machine and partly on a remote machine or may be executed entirely on a remote machine or a server.

In the context of the present disclosure, a computer-readable storage medium may be a tangible medium that may contain or store a computer program that is used by or in conjunction with a system, apparatus or device that executes instructions. The computer-readable storage medium may include, but is not limited to, an electronic, magnetic, optical, electromagnetic, infrared or semiconductor system, apparatus or device, or any suitable combination thereof. Alternatively, the computer-readable storage medium may be a machine-readable signal medium. Concrete examples of the machine-readable storage medium may include an electrical connection according to one or more wires, a portable computer disk, a hard disk, a random-access memory (RAM), a read-only memory (ROM), an erasable programmable read-only memory (EPROM) or a flash memory, an optical fiber, a portable compact disc read-only memory (CD-ROM), an optical storage device, a magnetic storage device, or any appropriate combination thereof.

In order that interaction with a user is provided, the systems and techniques described herein may be implemented on an electronic device. The electronic device has a display device (for example, a cathode-ray tube (CRT) or a liquid-crystal display (LCD) monitor) for displaying information to the user; and a keyboard and a pointing device (for example, a mouse or a trackball) through which the user can provide input for the electronic device. Other types of apparatuses may also be used for providing interaction with a user. For example, feedback provided for the user may be sensory feedback in any form (for example, visual feedback, auditory feedback, or haptic feedback). Moreover, input from the user may be received in any form (including acoustic input, voice input, or haptic input).

The systems and techniques described herein may be implemented in a computing system including a back-end component (for example, a data server), a computing system including a middleware component (for example, an application server), a computing system including a front-end component (for example, a client computer having a graphical user interface or a web browser through which a user can interact with implementations of the systems and techniques described herein), or a computing system including any combination of such back-end, middleware or front-end components. Components of a system may be interconnected by any form or medium of digital data communication (for example, a communication network). Examples of the communication network include a local area network (LAN), a wide area network (WAN), a blockchain network, and the Internet.

The computing system may include a client and a server. The client and the server are usually far away from each other and generally interact through the communication network. The relationship between the client and the server arises by virtue of computer programs running on respective computers and having a client-server relationship to each other. The server may be a cloud server, also referred to as a cloud computing server or a cloud host. As a host product in a cloud computing service system, the server solves the defects of difficult management and weak service scalability in a related physical host and a related VPS service.

It is to be understood that various forms of the preceding flows may be used with steps reordered, added, or removed. For example, the steps described in the present disclosure may be performed in parallel or sequentially, and may be performed in a different order, so long as the desired results of the technical solution of the present disclosure can be realized, and no limitation is imposed herein.

The preceding embodiments do not constitute a limitation on the scope of the present disclosure. It is to be understood by those skilled in the art that various modifications, combinations, subcombinations, and substitutions may be made according to design requirements and other factors. Any modifications, equivalents, and modifications that fall within the spirit and principles of the disclosure are intended to be included within the scope of the disclosure.

## Claims

1. A fishing navigation method, which is applied to a target fishing area, wherein the target fishing area comprises at least one fishing spot and is obtained based on a selection of a user, and wherein the method comprises:
acquiring at least one fishing plan corresponding to the target fishing area, wherein each of the at least one fishing plan comprises a location of each of at least one target fishing spot and a fishing time period corresponding to each of the at least one target fishing spot, wherein the at least one target fishing spot is selected from the at least one fishing spot of the target fishing area;
acquiring a fishing plan selection operation of the user;
determining a target fishing plan from the at least one fishing plan according to the fishing plan selection operation; and
generating navigation information according to the location of each of the at least one target fishing spot and the fishing time period corresponding to each of the at least one target fishing spot to guide the user to perform the target fishing plan.

2. The method according to claim 1, further comprising:
acquiring a fishing area selection operation of the user; and
determining the target fishing area from at least one fishing area according to the fishing area selection operation.

3. The method according to claim 2, further comprising:
acquiring current weather information of each of the at least one fishing area; and
determining first candidate fishing areas from the at least one fishing area according to the current weather information;
wherein determining the target fishing area from the at least one fishing area according to the fishing area selection operation comprises:
determining the target fishing area from the first candidate fishing areas according to the fishing area selection operation.

4. The method according to claim 2, further comprising:
acquiring a current location of the user; and
determining second candidate fishing areas from the at least one fishing area according to the current location;
wherein determining the target fishing area from the at least one fishing area according to the fishing area selection operation comprises:
determining the target fishing area from the second candidate fishing areas according to the fishing area selection operation.

5. The method according to claim 4, further comprising:
acquiring a location of each of the at least one fishing area;
wherein determining the second candidate fishing areas from the at least one fishing area according to the current location comprises:
determining a distance between the current location and each of the at least one fishing area according to the current location and the location of each of the at least one fishing area; and
determining one of the at least one fishing area having a distance smaller than a set distance threshold to be a second candidate fishing area of the second candidate fishing areas.

6. The method according to claim 2, further comprising:
acquiring fishing data related to the at least one fishing area;
acquiring a fishing data selection operation of the user; and
determining third candidate fishing areas from the at least one fishing area according to the fishing data selection operation;
wherein determining the target fishing area from the at least one fishing area according to the fishing area selection operation comprises:
determining the target fishing area from the third candidate fishing areas according to the fishing area selection operation.

7. The method according to claim 6, wherein the fishing data comprise at least one of a species, a size, a sex, or a color of a fish comprised in a fishing area related to the fishing data.

8. The method according to claim 1, further comprising:
acquiring a target fishing spot selection operation of the user; and
determining a target fishing spot from the at least one fishing spot corresponding to the target fishing area according to the target fishing spot selection operation;
wherein acquiring the at least one fishing plan corresponding to the target fishing area comprises:
determining the at least one fishing plan corresponding to the target fishing area according to the target fishing spot.

9. The method according to claim 8, further comprising:
acquiring a location of the target fishing spot and a fishing time period corresponding to the target fishing spot;
wherein determining the at least one fishing plan corresponding to the target fishing area according to the target fishing spot comprises:
determining the at least one fishing plan according to the location of the target fishing spot and the fishing time period corresponding to the target fishing spot.

10. The method according to claim 1, wherein the navigation information comprises a fishing route; and
wherein generating the navigation information according to the location of each of the at least one target fishing spot and the fishing time period corresponding to each of the at least one target fishing spot comprises:
acquiring the fishing time period corresponding to each of the at least one target fishing spot;
determining a time sequence corresponding to the at least one target fishing spot according to the fishing time period; and
generating the fishing route according to the time sequence and the location of each of the at least one target fishing spot.

11. The method according to claim 1, wherein the navigation information comprises a guidance route and an estimated arrival time, and wherein generating the navigation information according to the location of each of the at least one target fishing spot and the fishing time period corresponding to each of the at least one target fishing spot comprises:
acquiring a current time and a current location;
determining one of the at least one target fishing spot corresponding to a fishing time period that matches the current time to be a navigation fishing spot;
determining a location of the navigation fishing spot from the location of each of the at least one target fishing spot; and
generating the guidance route between the current location and the location of the navigation fishing spot, and determining the estimated arrival time according to a distance between the current location and the location of the navigation fishing spot.

12. The method according to claim 11, further comprising:
acquiring a motion speed of the user;
wherein determining the estimated arrival time according to the distance between the current location and the location of the navigation fishing spot comprises:
determining the estimated arrival time according to the motion speed and the distance between the current location and the location of the navigation fishing spot.

13. A fishing navigation apparatus, which is applied to a target fishing area, wherein the target fishing area comprises at least one fishing spot and is obtained based on a selection of a user, and wherein the fishing navigation apparatus comprises at least one processor, and the at least one processor is configured to:
acquire at least one fishing plan corresponding to the target fishing area, wherein each of the at least one fishing plan comprises a location of each of at least one target fishing spot and a fishing time period corresponding to each of the at least one target fishing spot, wherein the at least one target fishing spot is selected from the at least one fishing spot of the target fishing area;
acquire a fishing plan selection operation of the user;
determine a target fishing plan from the at least one fishing plan according to the fishing plan selection operation; and
generate navigation information according to the location of each of the at least one target fishing spot and the fishing time period corresponding to each of the at least one target fishing spot to guide the user to perform the target fishing plan.

14. An electronic device, comprising:
at least one processor; and
a memory, which is communicatively connected to the at least one processor;
wherein the memory stores a computer program executable by the at least one processor, and the computer program, when executed by the at least one processor, causes the at least one processor to perform the fishing navigation method according to any one of claims 1 to 12.

15. A computer-readable storage medium storing a computer instruction, wherein the computer instruction, when executed by a processor, causes the processor to perform the fishing navigation method according to any one of claims 1 to 12.
